# EUROPEAN PATENT SPECIFICATION

(11) **EP 0 521 929 B1**
(45) Date of publication and mention of the grant of the patent: **31.05.1995**
(21) Application number: 91906298.4
(22) Date of filing: 22.03.1991
(51) Int. Cl.: B29C 44/00

(54) **PROCESS FOR MANUFACTURING A PADDED ELEMENT**
VERFAHREN ZUR HERSTELLUNG EINES GEPOLSTERTEN ELEMENTES
PROCEDE DE FABRICATION D'UN ELEMENT REMBOURRE

(30) Priority: 28.03.1990 US 500080; 06.08.1990 US 562924; 06.08.1990 US 562925
(43) Date of publication of application: 13.01.1993
(73) Proprietor: WOODBRIDGE FOAM CORPORATION, Mississauga, Ontario L4Z 2G6 (CA)
(72) Inventor: HUGHES, Ian, L., Windsor, Ontario N9E 2Z1 (CA)
(74) Representative: Weitzel, Wolfgang, Dr.-Ing.
(86) International application number: CA9100095
(87) International publication number: WO9114566

(56) References cited:
- EP-A- 0 242 152
- DE-A- 3 525 417
- FR-A- 2 634 157
- GB-A- 2 114 051
- US-A- 4 593 449

## Description

### TECHNICAL FIELD

The present invention relates to a process for manufacturing a padded element. More particularly, the present invention relates to a process for manufacturing a unit-type padded element including a trim cover and a cushion member formed as a unit.

### BACKGROUND ART

Heretofore, the methods of assembling and joining a decorative cover to the underlying padding material typically fell within one of the following techniques: mechanically retained assembly, adhesive bonded assembly and foamed-in-place (also known as molded-in-place) assembly. Such assemblies have found use as, for example, vehicle seats.

In the mechanically retained assembly, the seat cover is cut and sewn to shape, and thereafter joined to the padding material by means of metal "hog rings" or "C" clips which join molded in wires in the seat pad to sewn-in-wires in the trim cover. Alternatively, the securing means could be "hook and loop" devices (commercially available under the trade name Velcro) wherein the "hook" is molded into the seat pad and the "loop" is either sewn in or laminated on to the seat cover material. Unfortunately, this mechanically retained assembly is deficient. For example, the method of manufacturing this assembly is relatively complicated in that auxiliary wires or "hooks" must be molded into the seat pad. Further, auxiliary wire pockets or loop sheeting must be sewn in or laminated on to the seat cover material. Still further, the cost of these mechanical auxiliary means is onerous when compared to the cost of the foam padding material and the seat cover material. This results in a seat which is produced in a relatively complicated manner and at a relatively high expense.

In the adhesive bonded assembly, a molded foam seat pad with the desired style and surface contours is located in a die or fixture. An adhesive in the form of a liquid, powder or film is applied to the surface of the pad. The seat cover material is held in a separate fixture and formed to the finished shape using one or more of vacuum (pressure), heat set, and steam. The seat cover material with the die fixture is then registered to the pad. Thereafter, application of heat, steam and pressure activates the adhesive and joins the seat pad to the seat cover material. This assembly is deficient in that the method of manufacturing it requires the use of external heat, steam, vacuum and relatively high pressure. Further, this assembly sometimes requires the use of a relatively expensive and toxic adhesive to bond the seat pad to the seat cover material.

In the foamed-in-place assembly, the seat cover material is located in a tool and held in place with mechanical devices and/or with application of a vacuum. An impervious barrier is applied to the underside of the cover to permit the vacuum to serve its intended function. Thereafter, liquid polyurethane foam is poured into the seat cover. A sealed lid closes the mold and remains closed until the foam is set in the desired shape. As the foam expands and fills the mold, it adheres directly to the impervious barrier. This assembly is deficient in that it requires the use of external pressure and vacuum. The assembly also requires the use of an impervious backing to vacuum form the seat cover material. The backing also results in prevention "breathing" of the finished system; this is undesirable since it reduces the comfort value of the finished system.

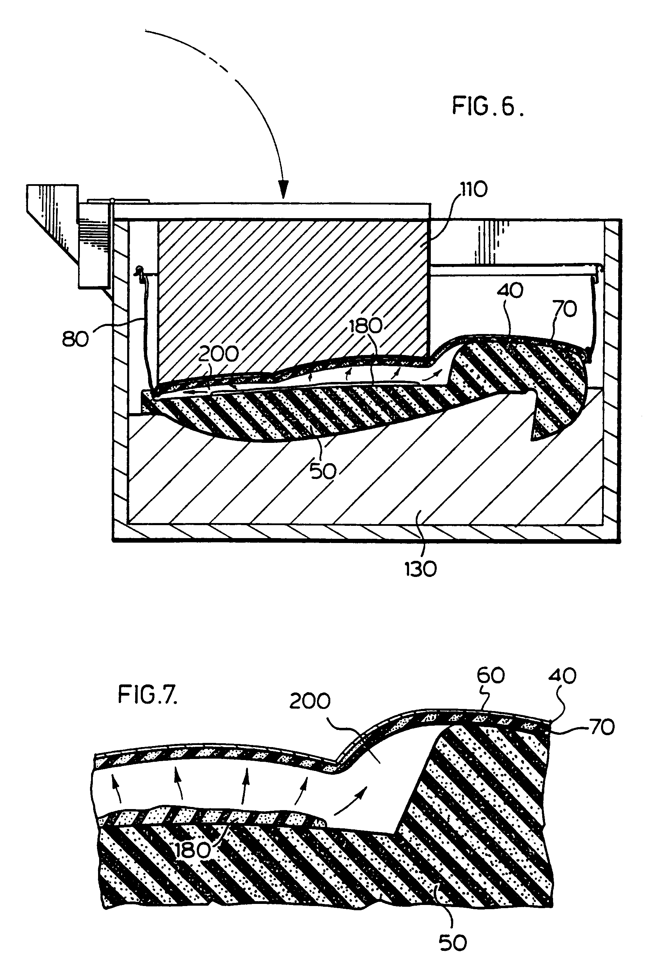

There have been attempts to produce covered seats wherein the impervious backing is omitted from the production process. Indeed, French patent 2,510,471 relates to the fabrication of padded elements suitable for use as seat bases or seatbacks, especially for vehicles. The manufacturing process described in the patent comprises placing the outer lining in the bottom of a mold, setting against the lining a preformed foam block having formed therein at least one cell or intermediate chamber, introducing a foamable mixture into the intermediate chamber to form a foam filling mass adhering to the facing portion of the lining, and removing the product from the mold. According to a preferred embodiment illustrated in Figure 6 of the French patent, the foamable material is introduced into the intermediate chamber through a hole 14 in the upper outer shell of the foam block. The French patent purportedly does away with the need for the impervious backing utilized in the foamed-in-place assembly discussed above. However, the process disclosed in the French patent is deficient since the liquid foam is poured directly onto (i.e. no impervious backing), and thus expands in a direction substantially away from, the cover material, there is an increased likelihood that "foam densification" will occur. Foam densification is a phenomenon which occurs when young foam (i.e. foam which has just begun to expend from the liquid state) is forced to expend in a environment which is unable to accommodate the pressure build-up from gas given off from the expanding foam mass. This results in the expanding foam mass being "driven" into the cover material with a force which results in the occurrence of foam densification. When this occurs, the surface of the cover material which, in many cases, is intended to be the finished surface of the article, has a relatively hard surface which belies the objective of providing a resilient, finished article.

In addition to the above-identified deficiencies of the prior art assemblies, extreme care must be taken when working with vinyl and with relatively exotic seat cover materials such as leather. For example, application of heat and steam to leather during the manufacturing of the assembly can permanently denature the leather thereby altering its texture and/or appearance. Further, the application of heat and steam can alter the gloss level of vinyl and also tends to wash out the grain surface.

EP 0 242 152 A2 proposes a method for producing a seat cushion, whereby foamed articles of at least two different hardnesses, for example seat cushions, are made by pouring a first foamable composition into a heated lower mold, forming it into a desired shape using a first upper mold; removing the mold and, as the composition reaches its tack-free state, pouring a second foamable composition on to it and shaping that with a second upper mold.

GB 2 114 051 A suggests a method whereby a fabric covered plastics foam assembly, such as a vehicle seat, is formed by inserting in a mould, a pre-formed unit 10 comprising a fabric cover having on one side a layer of plastics foam, or individual pieces of foam, secured to the fabric cover, so that the foam side of the unit defines part of the mould cavity, then filing the mould cavity with foaming plastics which is allowed to set so that a product is produced, for example, a vehicle seat, in the form of a foam block, having a fabric surfce afforded by the unit.

FR-2 634 157 A1 describes a procedure for the manufacture of automobile seats, whereby foamable material is introduced into a mould from the bottom thereof, so that the foam in the course of its expansion rises and eventually fills the mould up. Thereby, at least part of the mould is at the sime time used as the trim cover for the automobile seat.

It is an object of the present invention to provide a process for manufacturing of padded elements, particularly of automobile seats, which process does not require the use of external heat, steam, vacuum or relatively high pressure, and which provides a padded element which offers optimum seating comfort.

This object is achieved according to the invention by the process as defined in claim 1. Particular embodiments of the invention are disclosed in the dependent claims 2 to 18.

More in detail, by the process as per the invention a padded element may be obtained having the desired elasticity properties, and the manufacturing costs of which are relatively low.

As used throughout the present specification, the term "open recess", when used with reference to the cushion member, is intended to mean that the cushion member surface to be adhered to the trim cover is undersized when compared to the padded element to be formed. For example, the first portion of the cushion member, which comprises the open recess, may form a portion of the surface to be adhered to the trim cover (as illustrated hereinafter) - in this embodiment, the cushion member would also include a second portion coresponding proportionally to the finished surface of the padded element to be formed. Alternatively, the first portion of the cushion member, may form the entire surface to be adhered to the trim cover (e.g. an entire surface of the cushion member).

Thus, the present process may be used to produce padded elements without the requirement of using beat, pressure and steam. Moreover, for the manufacture of may padded elements, the process is not particularly restricted with regard to the point at which the liquid foamable polymeric composition is placed in the open recess of the cushion member. Thus, in one embodiment of the process, the trim cover and cushion member are in contact with one another (e.g. trim cover envelops cushion member) prior to introduction of the liquid foamable polymeric composition in the open recess of the latter - this is particularly useful in the manufacture of elongate padded elements (e.g. backrest for vehicle seat systems) comprising a rigid frame member. In another embodiment, the liquid foamable polymeric composition is placed in the open recess of the cushion member prior to contact of the latter with the trim cover.

In a preferred aspect of the process, the inner surface of the trim cover comprises a layer of material capable of enhancing adhesion between the trim cover and the polymeric composition after expansion. Examples of suitable such materials include a foam layer, a reticulated fabric layer and the like. Preferably, the material is a foam layer. For certain trim covers (e.g. those made of cloth), it is not necessary to have a separate layer of material to achieve enhanced adhesion between the trim cover and the polymeric composition after expension.

### BRIEF DESCRIPTION OF THE DRAWINGS

Embodiments of the present invention will be described with reference to the accompanying drawings in which Figures 1-7 illustrate a embodiment of the present process and Figures 8-13 illustrate another embodiment of the present process, as follows:
Figure 1 is a perspective view of a padded element produced in accordance with an embodiment of the present process;
Figure 2 is a section along the line 2-2 in Figure 1;
Figure 3 is a perspective view of a mold suitable for conducting a embodiment of the present process;
Figure 4 is a perspective view of the mold wherein the initial steps of an embodiment of the present process are conducted;
Figure 5 is a perspective view of the mold comprising the trim cover on the upper mold, the cushion member on the lower mold and the foamable polymeric composition in the open recess of the cushion member;
Figure 6 is a sectional view of the closed mold;
Figure 7 is a enlargement of a portion of Figure 6;
Figure 8 is a perspective view of a padded element produced in accordance with another embodiment of the present process;
Figure 9 is a section along the line 9-9 in Figure 8;
Figure 10 is a perspective view of the trim cover and the cushion member used in the initial step of a embodiment of the present process;
Figure 11 is a perspective view of the trim cover enveloping the cushion member;
Figure 12 is a sectional view of the trim cover/cushion member illustrated in Figure 11 being placed in an open mold; and
Figure 13 is a sectional view of the mold illustrated in Figure 12 in a closed position and illustrating introduction of the foamable composition into the open recess of the cushion member.

### BEST MODE FOR CARRYING OUT THE INVENTION

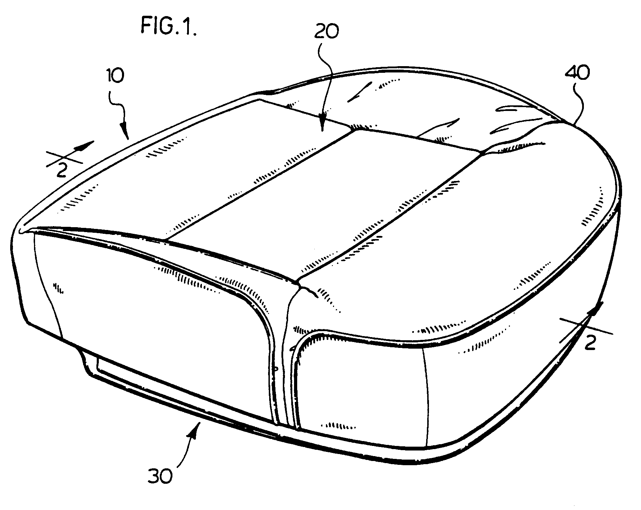

Preferred embodiments of the invention will now be described with reference to Figures 1-13. In the Figures, like numerals designate like parts.

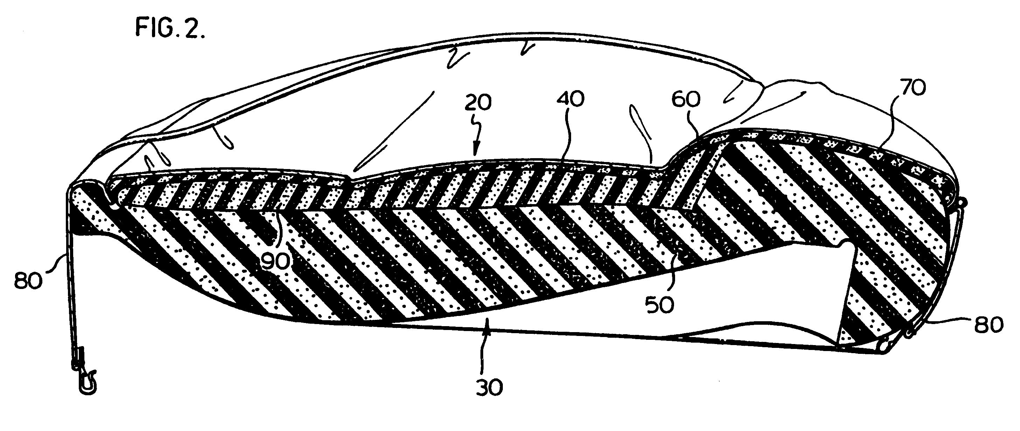

With reference to Figures 1 and 2, there is illustrated a padded element in the form of a vehicle seat 10 produced in accordance with the present process. Vehicle seat 10 comprises a upper surface 20 and a lower surface 30. Vehicle seat 10 further comprises a trim cover 40 and a cushion member 50. Trim cover 40 includes a finished outer surface 60, a inner surface comprising foam layer 70 and side panels 80. Adhering trim cover 40 to cushion member 50 is a foam member 90. The production of foam member 90 will be described in more detail hereinafter.

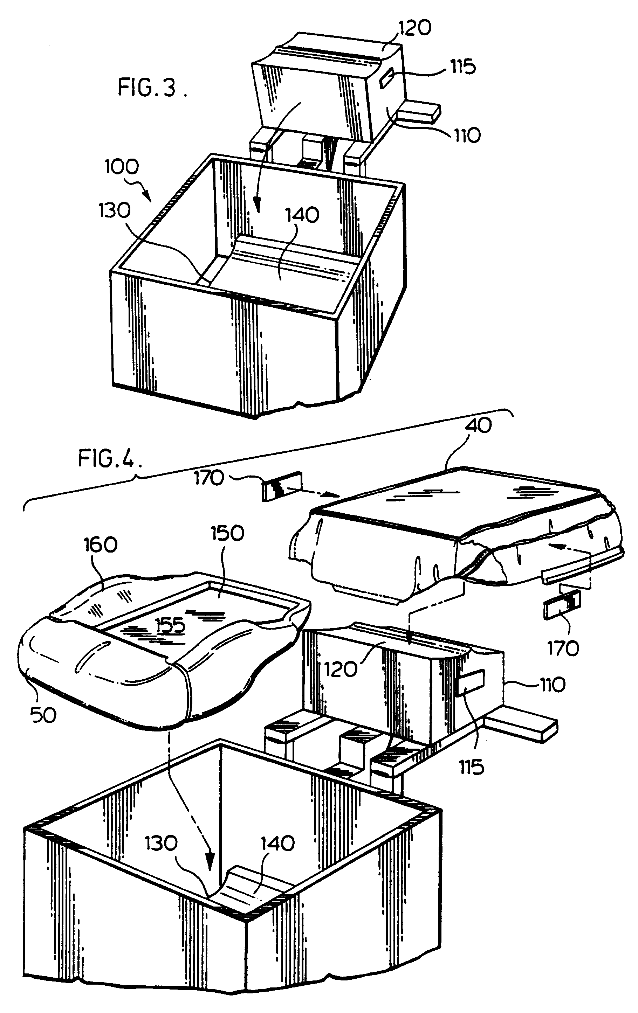

With reference to Figure 3, there is illustrated a mold 100 suitable for use in the present process. Mold 100 comprises an upper mold 110 having a interior surface 120 corresponding substantially to upper surface 20 of vehicle seat 10. Mold 100 further comprises a lower mold 130 having an interior surface 140 corresponding substantially to lower surface 30 of vehicle seat 10. Upper mold 110 further comprises steel bars 115 (only one is illustrated) oppositely disposed from one another.

With reference to Figure 4, cushion member 50 is placed on interior surface 140 of lower mold 130. Cushion member 50 comprises a first portion 150 having a open recess 155 therein and a second portion 160 corresponding proportionally to upper surface 20 of vehicle seat 10. By "proportionally" it is meat that, with the exception of first portion 150, the upper surface of cushion member 50 corresponds to upper surface 20 of vehicle seat 10 (i.e. the seat to be formed).

Trim cover 40 is placed on interior surface 120 of upper mold 110 such that finished upper surface 60 is in contact with interior surface 120. Trim cover 40 is held in place on upper mold 110 by any suitable means. In the embodiment illustrated in Figure 4, trim cover 40 may be held in place by magnetic bars 170 which attract steel bars 115 on upper mold 110 and serve to affix side panels 80 of the trim cover.

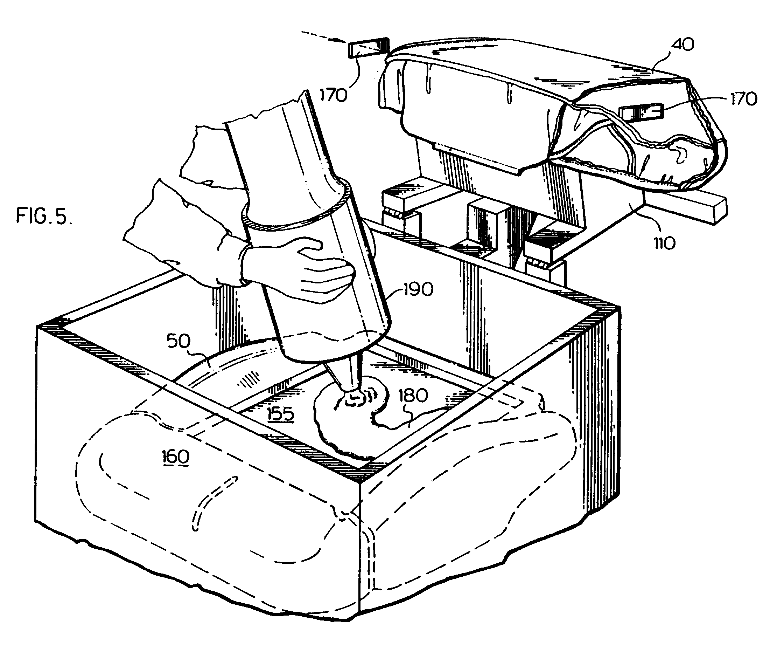

With reference to Figure 5, a liquid foamable polymeric composition 180 is dispensed from container 190 to open recess 155 in cushion member 50. After foamable polymeric composition 180 is dispensed in open recess 155, mold 100 is closed (Figure 6) to abut second portion 160 and trim cover 40 thereby enclosing open recess 155 to define enclosure 200. Thereafter, foamable composition 180 expands to fill substantially enclosure 200. This expansion results in the formation of foam member 90 (Figure 2). Depending on the type of foamable polymeric composition used, such expansion can occur within 30 seconds to three minutes alter dispensing in the open recess of the cushion member. Thus, foam member 90 adheres to first portion 150 of cushion member 50 and to a portion of foam layer 70 of trim cover 40. After the suitable period of time has elapsed for expansion of the foamable polymeric composition, the vehicle seat may be removed from the mold. Thereafter, side panels 80 of trim cover 40 may be pulled down over the sides of cushion member 50. The resultant vehicle seat is illustrated in Figures 1 and 2.

The foregoing process described with reference to Figures 1-7 is particularly suited for the production of padded elements wherein one surface thereof is unfinished and of frameless padded elements. For example, this process is particularly suitable for manufacturing the seat portion in vehicle seat systems. Such seat portions have finished upper and side surfaces. The undersurface of such seat portions are typically unfinished. Thus, the trim cover of the seat portion is adhered to the upper portion of the cushion member. Thereafter, the side portions are merely pulled over and secured beneath the seat to the frame of the seat.

It is has been discovered that another embodiment of the present process is more particularly suited for the manufacturing of padded elements which comprise virtually all surfaces as finished surfaces and which, optionally, further comprise a rigid frame member therein. Examples of such padded elements include the backrest portion of a vehicle seat system. For such a portion of a vehicle seat system, it has been discovered that manufacture of the finished padded element may be facilitated by providing a trim cover having at least one aperture therein and enveloping the cushion member. The liquid foamable polymeric composition is then placed in the open recess in the cushion member via the aperture in the trim cover.

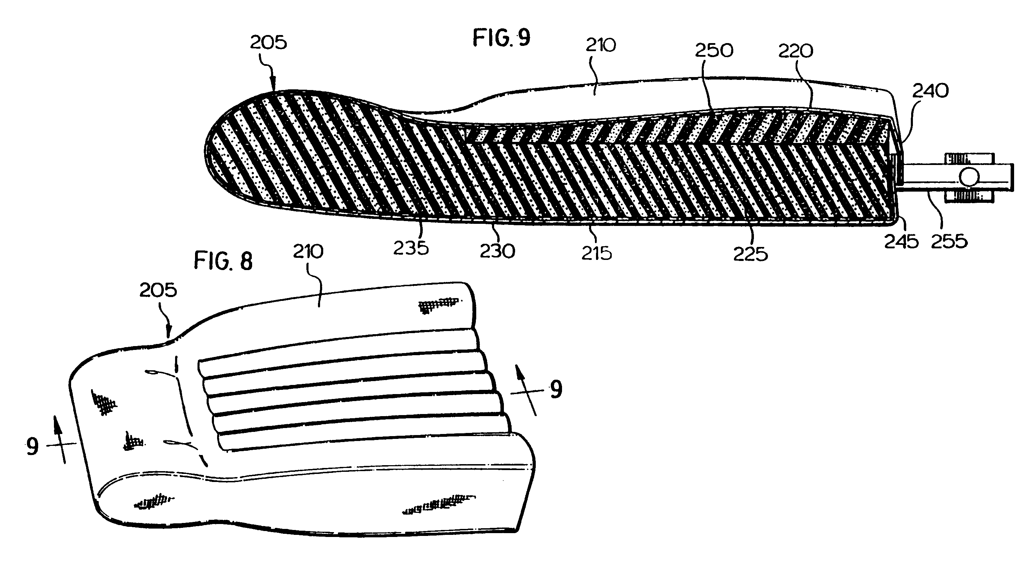

With reference to Figures 8 and 9, there is illustrated a padded element in the form of a backrest 205 produced in accordance with the present process. Backrest 205 comprises an upper surface 210 and a lower surface 215. Backrest 205 further comprises a trim cover 220 and a cushion member 225. Trim cover 220 includes a finished outer surface 230, an inner surface comprising foam layer 235 and end panels 240 and 245. Adhering trim cover 220 to cushion member 225 is a foam member 250. Cushion member 225 encases a rigid frame member 255. The production of foam member 250 will be described in more detail hereinafter.

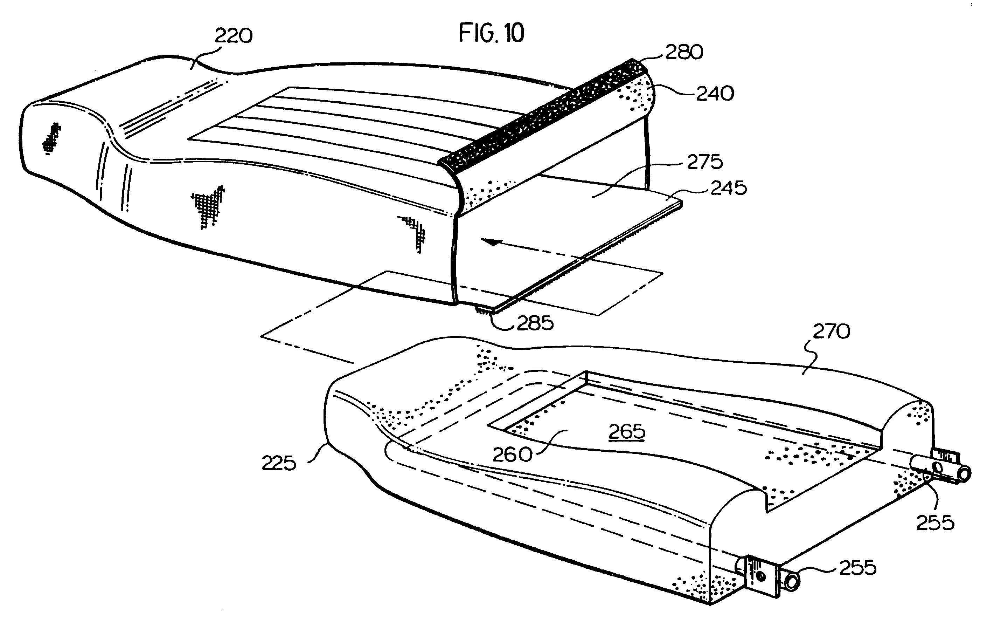

With reference to Figure 10, there is illustrated a mode of placing cushion member 225 in trim cover 220. Cushion member 225 comprises a first portion 260 having an open recess 265 therein and a second portion 270 corresponding proportionally to upper surface 210 of backrest 205. By "proportionally" it is meant that, with the exception of first portion 260, the upper surface of cushion member 225 corresponds to upper surface 210 of backrest 205 (i.e. the backrest to be formed). As illustrated by the broken lines in cushion member 225, rigid flame member 255 follows the periphery of first portion 260 and is encased by cushion member 225.

Trim cover 220 comprises an aperture 275 through which cushion member 225 is inserted. End panel 240 of trim cover 220 comprises a row of hooks 280 on the inner surface thereof. End panel 245 comprises a row of loops 285 on the outer surface thereof.

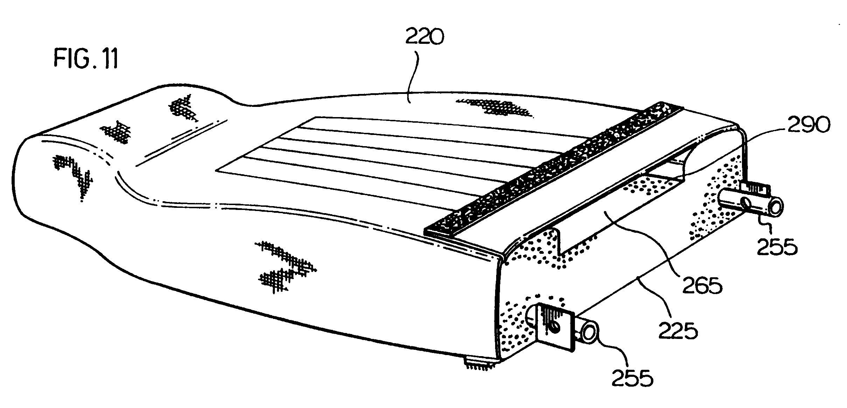

With reference to Figure 11, there is illustrated trim cover 220 enveloping cushion member 225. A portion 290 of aperture 275 in trim cover 220 is exposed permitting access to open recess 265 of cushion member 225.

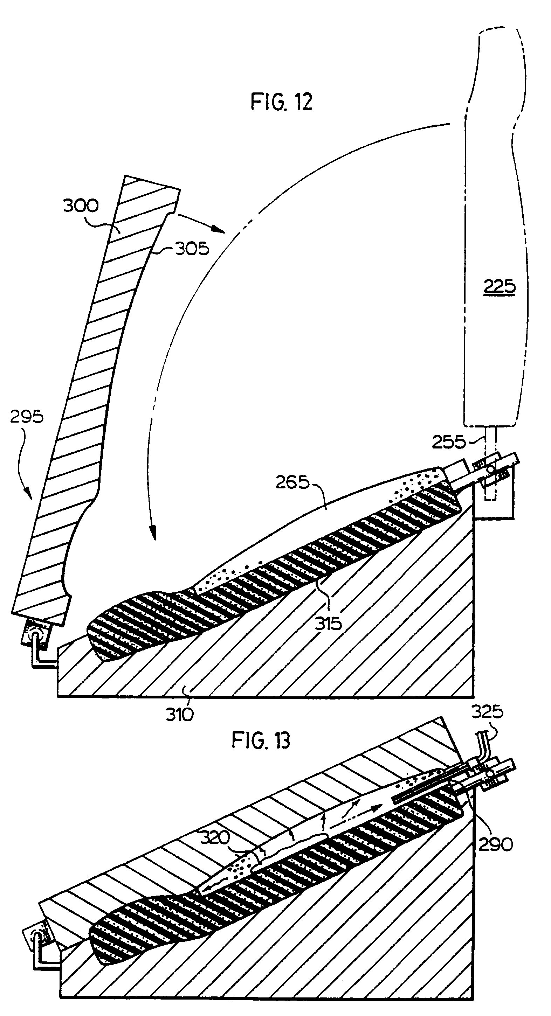

With reference to Figure 12, there is illustrated a mold 295 suitable for use in the present process. Mold 295 comprises an upper mold 300 having a inner surface 305 corresponding to upper surface 210 (Figures 8 and 9) of the backrest to be formed. Mold 295 further comprises a lower mold 310 having an inner surface 315 corresponding substantially to the lower surface 215 of backrest 205 (Figures 8 and 9) to be formed.

With further reference to Figure 12, after cushion member 225 has been mounted, via frame member 255, to lower mold 310, the mounted cushion member is pivoted such that lower surface 215 (Figures 8 and 9) is in contact with inner surface 315 of lower mold 310. Thereafter, upper mold 300 is pivoted such that inner surface 305 is in contact with upper surface 210.

With reference to Figure 13, a liquid foamable polymeric composition 320 is dispensed from a suitable dispensing means 325 via portion 290. After composition 320 has been dispensed in open recess 265, dispensing means 325 is withdrawn from open recess 265 and portion 290 is blocked by any suitable means (not shown). Thereafter, foamable composition 320 expends to fill substantially open recess 265 thereby forming foam member 250 illustrated in Figure 9. As illustrated in Figures 12 and 13, backrest 205 to be formed may be suitably inclined to assist in dispensing of foamable polymeric composition 320 in open recess 265.

After liquid foamable polymeric composition 320 has expended and cured, upper mold 300 may be pivoted upward from lower mold 310. Finished backrest 205 may then be removed from lower mold 310, and thereafter end panels 240 and 245 may be closed and fastened to one another by hooks 280 and loops 285 to provide backrest 205 illustrated in Figures 8 and 9.

The form of liquid foamable polymeric compositions suitable for use in the present process and the manner by which it is dispensed into the open recess of the cushion member is not particularly restricted. Preferably, the foamable polymeric composition comprises a polyurethane. More preferably, the polyurethane is a diphenylmethane diisocyanate (MDI)-based system of low index and of a high molecular weight conventional polyol. Such a system is typically completely "water blown" using highly-catalyzed odorless amines and a cell regulator. Typically, this system cures at room temperature in about three minutes or less.

The present process can be used to manufacture a variety of padded elements. Non-limiting examples of such padded elements include: components of vehicle seats such as the seat cushion, the backrest and the headrest; components of other types of seat systems such as those used in boats, snowmobiles, and in office furniture; pillar covers; and padded interior door and quarter trim panels in vehicles.

Further, the present process can be used with virtually all conventional trim cover materials. Non-limiting examples of such materials include leather, vinyl and cloth. Preferably, the inner surface of the trim cover includes a foam layer made of polyurethane foam.

The present process can be used with virtually any cushion member which is made from a resilient material. The preferred foam cushion member is made from a polymer foam, more preferably polyurethane foam. Alternatively, the cushion member may be made from horsehair or coconut fibers which are resin-filled, or from cotton or jute.

In the most preferred embodiment of the present process, each of the foam layer (when present) of the inner surface of the trim cover, the cushion member and the foamable polymeric composition comprises polyurethane.

Thus, the present process can be used to produce a padded element in a convenient and efficient manner. There is no requirement to use high temperature, pressure, vacuum or steam during the present process as there is with the prior art processes discussed hereinabove.

## Claims

1. A process for manufacturing a padded element (10) which comprises providing a cushion member (50) having an open recess (155) in one surface thereof, providing a trim cover (40) having a finished outer surface (60) and an inner surface, and placing a liquid foamable polymeric composition (180) in said open recess (155) in a manner whereby said polymeric composition (180) expands to meet and adhere to the inner surface of said trim cover (40).

2. The process as defined in claim 1, wherein the inner surface of the trim cover (40) comprises a layer of material (70) suitable for adhering to the polymeric composition.

3. The process as defined in claim 2, wherein said material (70) is a foam layer.

4. The process as defined in claim 2, wherein said material (70) is a reticulated fabric.

5. The process as defined in claim 3, wherein the foam layer (70) comprises a polyurethane foam.

6. The process as defined in one of claims 1 to 4, wherein said cushion member (50) comprises a polyurethane foam.

7. The process as defined in one of claims 1 to 6, wherein said foamable polymeric composition (180) comprises polyurethane.

8. The process as defined in claim 3 and in one of claims 5 to 7, wherein each of the foam layer (70), said cushion member (50) and said foamable polymeric composition (180) comprises polyurethane.

9. The process as defined in one of claims 1 to 8, wherein the padded element is a component of a vehicle seat.

10. The process as defined in one of claims 1 to 9, wherein said component is a seat cushion.

11. The process as defined in one of claims 1 to 10, wherein said component is a backrest.

12. The process as defined in one of claims 1 to 8, wherein the padded element is a component of a seat.

13. The process as defined in one of claims 1 to 12, the process further comprising the steps of
(i) using a mold (100) including an upper mold (110) having an interior surface (120) corresponding substantially to the upper surface (20) of the padded element and a lower mold (130) having an interior surface (140) corresponding substantially to the lower surface (30) of the padded element
(ii) placing the cushion member (50) on said lower mold (130), the upper surface of said cushion member (50) comprising a portion having the said open recess therein
(iii)placing the said trim cover (40) on said upper mold (110) such that its finished outer surface (60) comes into contact with the interior surface (120) of said upper mold (110)
(iv) closing said upper mold (110) and said lower mold (130) to cover said open recess (155) and form an enclosure containing said liquid foamable polymeric composition (180), said polymeric composition (180) expanding to fill substantially said open recess (155), and adhering to said cushion member (50) and to the inner surface of said trim cover (40).

14. The process as defined in one of claims 1-12, the process further comprising the steps of:
(i) using a cushion member (50), the said open recess (155) of which having a lower surface, the cushion member (50) being enveloped by the said trim cover (40), the trim cover (40) having at least one aperture therein, said open recess (155) and said trim cover (40) defining a cavity
(ii) closing said upper mold (110) and said lower mold (130) so that said upper mold (110) is in contact with the upper outer surface (60) of said trim cover (40);
(iii) dispensing the liquid foamable polymeric composition (180) in said cavity and onto said lower surface of said open recess (155) via the aperture in the trim cover (40); and
(iv) allowing the polymeric composition to expand to fill substantially the cavity and come into contact with said inner surface of said trim cover (40) such that the first portion corresponds proportionally to the finished surface of the padded element, the expanded polymeric composition adhering to the first portion of the cushion member and to the inner surface of the trim cover (40).

15. The process as defined in claim 13 or 14, wherein said cushion member further comprises a second portion corresponding proportionally to the finished surface of the padded element.

16. The process as defined in one of claims 1 to 15, wherein said trim cover (40) includes a finished upper surface made of leather.

17. The process as defined in one of claims 1 to 15, wherein said trim cover (40) includes a finished upper surface (60) made of vinyl.

18. The process as defined in one of claims 1 to 15, wherein said trim cover (40) includes a finished upper surface (60) made of cloth.

## Patentansprüche

1. Verfahren zum Herstellen eines gepolsterten Elementes (10) mit einem Kissenelement (50), das eine offene Aussparung (155) in einer seiner Flächen aufweist, Anordnen eines Deckbezuges (40) mit einer fertigen Außenfläche (60) und einer Innenfläche, und Einbringen einer flüssigen, aufschäumbaren Polymerverbindung (180) in die offene Aussparung (155) in einer solchen Weise, daß die Polymerverbindung (180) expandiert, um zur Innenfläche des Deckbezuges (40) zu reichen und an dieser anzuhaften.

2. Verfahren nach Anspruch 1, wobei die Innenfläche des Deckbezuges (40) eine Lage aus Material (70) aufweist, die geeignet ist zum Anhaften an der Polymerverbindung.

3. Verfahren nach Anspruch 2, wobei das Material (70) eine Schaumlage ist.

4. Verfahren nach Anspruch 2, wobei das Material (70) ein Netzgewebe ist.

5. Verfahren nach Anspruch 3, wobei die Schaumlage (70) einen Polyurethanschaum aufweist.

6. Verfahren nach einem der Ansprüche 1 bis 4, wobei das Kissenelement (50) einen Polyurethanschaum aufweist.

7. Verfahren nach einem der Ansprüche 1 bis 6, wobei die aufschäumbare Polymerverbindung (180) Polyurethan umfaßt.

8. Verfahren nach Anspruch 3 und nach einem der Ansprüche 5 bis 7, wobei die Schaumlage (70), das Kissenelement (50) und die aufschäumbare Polymerverbindung (180) Polyurethan umfaßt.

9. Verfahren nach einem der Ansprüche 1 bis 8, wobei das gepolsterte Element eine Komponente eines Fahrzeugsitzes ist.

10. Verfahren nach einem der Ansprüche 1 bis 9, wobei die Komponente ein Sitzkissen ist.

11. Verfahren nach einem der Ansprüche 1 bis 10, wobei die Komponente eine Rückenlehne ist.

12. Verfahren nach einem der Ansprüche 1 bis 8, wobei das gepolsterte Element eine Komponente eines Sitzes ist.

13. Verfahren nach einem der Ansprüche 1 bis 12, weiterhin umfassend die folgenden Verfahrensschritte:
(1) verwenden einer Form (100) mit einer oberen Form (110) deren innere Fläche (120) im wesentlichen der oberen Fläche (20) des gepolsterten Elementes entspricht, und eine untere Form (130) mit einer Innenfläche (140), die im wesentlichen der unteren Fläche (30) des gepolsterten Elementes entspricht;
(2) Einsetzen des Kissenelementes (50) in die untere Form (130), wobei die obere Fläche des Kissenelementes (50) einen Teil umfaßt, der eine offene Aussparung aufweist;
(3) Aufbringen des Deckbezuges (40) auf die obere Form (110), derart, daß ihre fertige Außenfläche (60) mit der Innenfläche (120) der oberen Form (110) in Kontakt gelangt;
(4) Schließen der oberen Form (110) und der unteren Form (130), so daß die offene Aussparung (155) bedeckt ist und eine Kammer bildet, die die flüssige aufschäumbare Polymerverbindung (180) enthält, wobei die Polymerverbindung (180) expandiert, um die offene Aussparung (155) im wesentlichen auszufüllen und am Kissenelement (50) sowie an der inneren Fläche des Deckbezuges (40) zu haften.

14. Verfahren nach einem der Ansprüche 1 bis 12, umfassend die folgenden Schritte:
(1) Es wird ein Kissenelement (50) verwendet, dessen offene Aussparung (155) eine untere Fläche aufweist und das vom Deckbezug (40) eingehüllt wird, wobei der Deckbezug (40) wenigstens eine Ausnehmung aufweist und die offene Aussparung (155) und der Deckbezug (40) eine Höhlung bilden;
(2) Schließen der oberen Form (110) und der unteren Form (130), so daß die obere Form (110) mit der oberen Außenfläche (60) des Deckbezuges (40) in Kontakt steht;
(3) Abgeben der flüssigen aufschäumbaren Polymerverbindung (180) in die Höhlung und auf die untere Fläche der offenen Aussparung (155) durch die Öffnung im Deckbezug (40), und
(4) die Polymerverbindung wird expandieren gelassen, so daß sie die Höhlung im wesentlichen ausfüllt und mit der inneren Fläche des Deckbezuges (40) in Kontakt gelangt, so daß der erste Teil der fertigen Fläche des gepolsterten Elementes proportional entspricht und die expandierte Polymerverbindung am ersten Teil des Kissenelementes und an der inneren Fläche des Deckbezuges (40) haftet.

15. Verfahren nach einem der Ansprüche 13 oder 14, wobei das Kissenelement weiterhin einen zweiten Teil aufweist, der der fertigen Fläche des gepolsterten Elementes proportional entspricht.

16. Verfahren nach einem der Ansprüche 1 bis 15, wobei der Deckbezug (40) eine fertige obere Fläche aus Leder umfaßt.

17. Verfahren nach einem der Ansprüche 1 bis 15, wobei der Deckbezug (40) eine fertige obere Fläche aus Vinyl umfaßt.

18. Verfahren nach einem der Ansprüche 1 bis 15, wobei der Deckbezug (40) eine fertige obere Fläche (60) aus Gewebe umfaßt.

## Revendications

1. Un procédé de fabrication d'un élément rembourré (10) comprenant les étapes consistant: à prévoir un organe formant coussin (50), ayant une cavité ouverte (155) sur l'une de ses surfaces, à prévoir un revêtement de finition (40) ayant une surface extérieure (60) finie et une surface intérieure, et à disposer dans ladite cavité ouverte (155) une composition (180), polymère, liquide et susceptible de produire de la mousse de telle manière que ladite composition polymère (180) se dilate jusqu'à pour atteindre et adhérer à la surface intérieure dudit revêtement de finition (40).

2. Le procédé selon la revendication 1, dans lequel la surface intérieure du revêtement de finition (40) comprend une couche de matériau (70) adéquate pour faire adhérer de la composition polymère.

3. Le procédé selon la revendication 2, dans lequel ledit matériau (70) est une couche de mousse.

4. Le procédé selon la revendication 2, dans lequel ledit matériau (70) est un tissu réticulé.

5. Le procédé selon la revendication 3, dans lequel la couche de mousse (70) comprend une mousse de polyuréthane.

6. Le procédé selon l'une des revendications 1 à 4, dans lequel ledit organe formant coussin (50) comprend une mousse de polyuréthane.

7. Le procédé selon l'une des revendications 1 à 6, dans lequel ladite composition polymère (180) susceptible de produire de la mousse comprend du polyuréthane.

8. Le procédé selon la revendication 3 et l'une des revendications 5 à 7, dans lequel chaque élément parmi la couche de mousse (70), ledit organe formant coussin (50) et ladite composition polymère (180) susceptible de produire de la mousse, comprend du polyuréthane.

9. Le procédé selon l'une des revendications 1 à 8, dans lequel l'élément rembourré est un composant d'un siège de véhicule.

10. Le procédé selon l'une des revendications 1 à 9, dans lequel ledit composant est un coussin de siège.

11. Le procédé selon l'une des revendications 1 à 10, dans lequel ledit composant est un dossier.

12. Le procédé selon l'une des revendications 1 à 8, dans lequel l'élément rembourré est un composant d'un siège.

13. Le procédé selon l'une des revendications 1 à 12, le procédé comprenant en outre les étapes consistant
(i) à utiliser un moule (100) comprenant un moule supérieur (110) ayant une surface intérieure (120) correspondant sensiblement à la surface supérieure (20) de l'élément rembourré et un moule inférieur (130) ayant une surface intérieure (140) correspondant sensiblement à la surface inférieure (30) de l'élément rembourré,
(ii) à placer l'organe formant coussin (50) sur ledit moule inférieur (130), la surface supérieure dudit organe formant coussin (50) comprenant une partie ayant en son sein ladite cavité ouverte,
(iii) à placer ledit revêtement de finition (40) sur ledit moule supérieur (110), de telle manière que sa surface extérieure finie (60) vienne en contact avec la surface intérieure (120) dudit moule supérieur (110),
(iv) à fermer ledit moule supérieur (110) et ledit moule inférieur (130) pour recouvrir ladite cavité ouverte (155) et former une enceinte contenant ladite composition (180) polymère, liquide et susceptible de produire de la mousse, ladite composition polymère (180) se dilatant pour remplir sensiblement ladite cavité ouverte (155) et adhérer audit organe formant coussin (50) et à la surface intérieure dudit revêtement de finition (40).

14. Le procédé selon l'une des revendications 1 à 12, le procédé comprenant en outre les étapes dans consistant:
(i) à utiliser un organe formant coussin (50), dont ladite cavité ouverte (155) a une surface inférieure, l'organe formant coussin (50) étant enveloppé par ledit revêtement de finition (40), le revêtement de finition (40) ayant au moins une ouverture en son sein, ladite cavité ouverte (155) et ledit revêtement de finition (40) définissant une cavité,
(ii) à fermer ledit moule supérieur (110) et ledit moule inférieur (130), de telle manière que ledit moule supérieur (110) soit en contact avec la surface extérieure supérieure (60) dudit revêtement de finition (40),
(iii) à distribuer la composition (180), polymère, liquide et susceptible de produire de la mousse dans ladite cavité et sur ladite surface inférieure de ladite cavité ouverte (155), via l'ouverture ménagée dans le revêtement de finition (40), et
(iv) à laisser la composition polymère se dilater pour remplir sensiblement la cavité et venir en contact avec ladite surface intérieure dudit revêtement de finition (40), de telle manière que la première partie corresponde proportionnellement à la surface finie de l'élément rembourré, la composition polymère adhérant à la première partie de l'organe formant coussinet et à la surface intérieure du revêtement de finition (40).

15. Le procédé selon la revendication 13 ou 14, dans lequel ledit organe formant coussin comprend en outre une deuxième partie correspondant proportionnellement à la surface finie de l'élément rembourré.

16. Le procédé selon l'une des revendications 1 à 15, dans lequel ledit revêtement de finition (40) comprend une surface supérieure finie réalisée en cuir.

17. Le procédé selon l'une des revendications 1 à 15, dans lequel ledit revêtement de finition (40) comprend une surface supérieure finie (60) en vinyle.

18. Le procédé selon l'une des revendications 1 à 15, dans lequel ledit revêtement de finition (40) comprend une surface supérieure finie (60) en tissu.
